(19) Europäisches Patentamt
European Patent Office
Office européen des brevets

(11) **EP 3 249 922 A1**

(12) **EUROPEAN PATENT APPLICATION**

(43) Date of publication:
**29.11.2017 Bulletin 2017/48**

(51) Int Cl.:
***H04N 13/02*** *(2006.01)*

(21) Application number: **17171671.5**

(22) Date of filing: **18.05.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **24.05.2016 EP 16305600**

(71) Applicant: **Thomson Licensing
92130 Issy-les-Moulineaux (FR)**

(72) Inventors:
• FLEUREAU, Julien
  **35576 CESSON SEVIGNE CEDEX (FR)**
• TAPIE, Thierry
  **35576 CESSON SEVIGNE CEDEX (FR)**
• DORE, Renaud
  **35576 CESSON SEVIGNE CEDEX (FR)**
• THUDOR, Franck
  **35576 CESSON SEVIGNE CEDEX (FR)**

(74) Representative: **Merlet, Hugues
  TECHNICOLOR
  1-5, rue Jeanne d'Arc
  92130 Issy-les-Moulineaux (FR)**

(54) **METHOD, APPARATUS AND STREAM FOR IMMERSIVE VIDEO FORMAT**

(57)    Method and device for generating a stream from image(s) of an object, comprising: obtaining data associated with points of a point cloud representing at least a part of the object; obtaining a parametric surface according to at least a geometric characteristic associated with the at least a part of the object and pose information of an acquisition device used to acquire the at least one image; obtaining a height map and one or more texture maps associated with the parametric surface; generating the stream by combining together a first syntax element relative to the at least a parameter, a second syntax element relative to the height map, a third syntax element relative to the at least one texture map and a fourth syntax element relative to a position of the acquisition device.

The disclosure relates further to a method and device for rendering an image of the object from the stream thus obtained.

**Fig 4**

## Description

### 1. Technical field

The present disclosure relates to the domain of immersive video content. The present disclosure is also understood in the context of the formatting of the data representative of the immersive content, for example for the rendering on end-user devices such as mobile devices or Head-Mounted Displays.

### 2. Background

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Display systems such as a head-mounted display (HMD) or a CAVE allow a user to browse into an immersive video content. The immersive video content may be obtained with CGI (Computer-generated imagery) techniques. With such immersive video content, it is possible to compute the content according to the point of view of the user watching it, but with unrealistic graphical quality. The immersive video content may be obtained with the mapping of a video (e.g. a video acquired by several cameras) on a surface such as a sphere or a cube. Such an immersive video content provides good image quality but issues related to the parallax, especially for objects of the scene of the foreground, i.e. close from the cameras, appear.

In the context of immersive video content, free-viewpoint video (FVV) is a technique for representation and coding of multi-view video and subsequent re-rendering from arbitrary viewpoints. While increasing the user experience in immersive context, the amount of data to be transported to the renderer is very important and may be an issue.

### 3. Summary

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of generating a stream from at least one image of an object of a scene, the method comprising:

- obtaining data associated with points of a point cloud representing at least a part of the object;
- obtaining at least a parameter representative of a parametric surface according to at least a geometric characteristic associated with the at least a part of the object and pose information of an acquisition device used to acquire the at least one image, the at least a geometric characteristic being obtained from a surface associated with points of the point cloud associated with the at least a part of the object;
- obtaining a height map associated with the parametric surface from the data, the height map comprising information representative of distance between the at least a part of the object and the parametric surface;
- obtaining at least one texture map associated with the parametric surface from the data;
- generating the stream by combining together a first syntax element relative to the at least a parameter, a second syntax element relative to the height map, a third syntax element relative to the at least one texture map and a fourth syntax element relative to a position of the acquisition device.

According to a particular characteristic, the at least a parameter varies over time according to a deformation of the at least a part of the object.

According to a specific characteristic, the data comprises texture information and information representative of depth.

The present disclosure also relates to a device configured to implement the aforementioned method of generating a stream from at least one image of an object of a scene.

The present disclosure also relates to a stream carrying data representative of an object of a scene, wherein the data comprises:

- a first syntax element relative to at least a parameter representative of a parametric surface obtained according to at least a geometric characteristic associated with the at least a part of the object and pose information of an acquisition device used to acquire the at least one image, said at least a geometric characteristic being obtained from a surface associated with points of the point cloud associated with the at least a part of the object;
- a second syntax element relative to a height map obtained from second data associated with points of a point cloud representing the at least a part of the object, the height map comprising information representative of distance between the at least a part of the object and the parametric surface;

- a third syntax element relative to at least one texture map obtained from the second data; and
- a fourth syntax element relative to a position of the acquisition device.

According to a particular characteristic, the first syntax element varies over time according to a change of the at least a parameter that varies according to a deformation of the at least a part of the object.

According to a specific characteristic, the second data comprises texture information and information representative of depth.

The present disclosure also relates to a method of rendering an image of at least a part of an object from a stream carrying data representative of said object, the method comprising:

- obtaining at least a parameter representative of a parametric surface from a first syntax element of the stream;
- obtaining a height map from a second syntax element of the stream, the height map comprising information representative of distance between the at least a part of the object and the parametric surface;
- obtaining at least one texture map from a third syntax element of the stream;
- obtaining data associated with points of a point cloud representing the at least a part of the object from the parametric surface, the height map and the at least one texture map;
- rendering the image based on the data and information representative of a position of an acquisition device from a fourth syntax element of the stream.

According to a particular characteristic, the data comprises texture information and information representative of depth.

According to a specific characteristic, the rendering comprises splat rendering of said data.

The present disclosure also relates to a device configured to implement the aforementioned method of rendering an image of at least a part of an object from a stream carrying data representative of said object.

The present disclosure also relates to a computer program product comprising program code instructions to execute the steps of the method of rendering an image of at least a part of an object from a stream carrying data representative of said object, when this program is executed on a computer.

The present disclosure also relates to a computer program product comprising program code instructions to execute the steps of the method of generating a stream from at least one image of an object of a scene.

The present disclosure also relates to a (non-transitory) processor readable medium having stored therein instructions for causing a processor to perform at least the abovementioned method of generating a stream from at least one image of an object of a scene.

The present disclosure also relates to a (non-transitory) processor readable medium having stored therein instructions for causing a processor to perform at least the abovementioned method of rendering an image of at least a part of an object from a stream carrying data representative of said object, when this program is executed on a computer.

## 4. List of figures

The present disclosure will be better understood, and other specific features and advantages will emerge upon reading the following description, the description making reference to the annexed drawings wherein:

- figure 1 shows an immersive content, according to a particular embodiment of the present principles;
- figures 2A and 2B show a lightfield acquisition device configured to acquire images of a scene for obtaining at least a part of the immersive content of figure 1, according to a particular embodiment of the present principles;
- figure 3 shows representations of a part of an object of the scene acquired with the acquisition device of figures 2A and 2B, according to a particular embodiment of the present principles;
- figure 4 shows a parametric surface used in a process for representing the object of figure 3, according to a particular embodiment of the present principles;
- figures 5A, 5B and 5C show exemplary embodiments of the sampling of the parametric surface of figure 4;
- figure 6 shows the matching of the parametric surface of figure 4 with regard to a deformation of the object of figure 3, according to a particular embodiment of the present principles;
- figure 7 shows the association of texture information with the parametric surface of figure 4, according to a first particular embodiment of the present principles;
- figure 8 shows the association of texture information with the parametric surface of figure 4, according to a second particular embodiment of the present principles;
- figure 9 shows an example of an architecture of a device configured for implementing the method(s) of figure 12 and/or figure 13, in accordance with an example of the present principles;
- figure 10 shows two remote devices of figure 9 communicating over a communication network, in accordance with an example of the present principles;
- figure 11 shows the syntax of a signal carrying a description of the object of figure 3, in accordance with an example of the present principles;
- figure 12 shows a method of generating a stream of data describing the object of figure 3, in accordance with an example of the present principles;

- figure 13 shows a method of rendering an image of the object of figure 3, in accordance with an example of the present principles.

## 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present description illustrates the principles of the present disclosure. It will thus be appreciated that those skilled in the art will be able to devise various arrangements that, although not explicitly described or shown herein, embody the principles of the disclosure.

The present principles will be described in reference to a particular embodiment of a method of generating a stream of data representative of an object of a scene and/or of a method of rendering one or more images of this object from the generated data stream. A point cloud representing the object (or part of it) is determined from one or more images of the object (or part of it) acquired with one or more acquisition devices. A parametric surface is calculated as a basis for the representation of the object (or part of it), the parametric surface being calculated by using geometric characteristic of the object (e.g. extreme points of the point cloud and/or normal information associated with elements of the external surface of the object obtained from the point cloud) and the pose information of the acquisition device(s) (e.g. for orienting the parametric surface). A height map and one or more texture maps are determined and associated with the parametric surface. A data stream is generated by combining and/or coding information representative of the parametric surface (i.e. parameters) with height information of the height map, texture information of the texture map(s) with pose information of the acquisition device(s). On the decoder/rendered side, an image of the object (or part of it) may be obtained by decoding/extraction the information representative of the parametric surface and associated height and texture maps.

The use of a parametric surface as reference for representing the object with texture and height information associated with samples of the parametric surface enables to reduce the amount of data needed for representing the object in comparison to a representation with a point cloud.

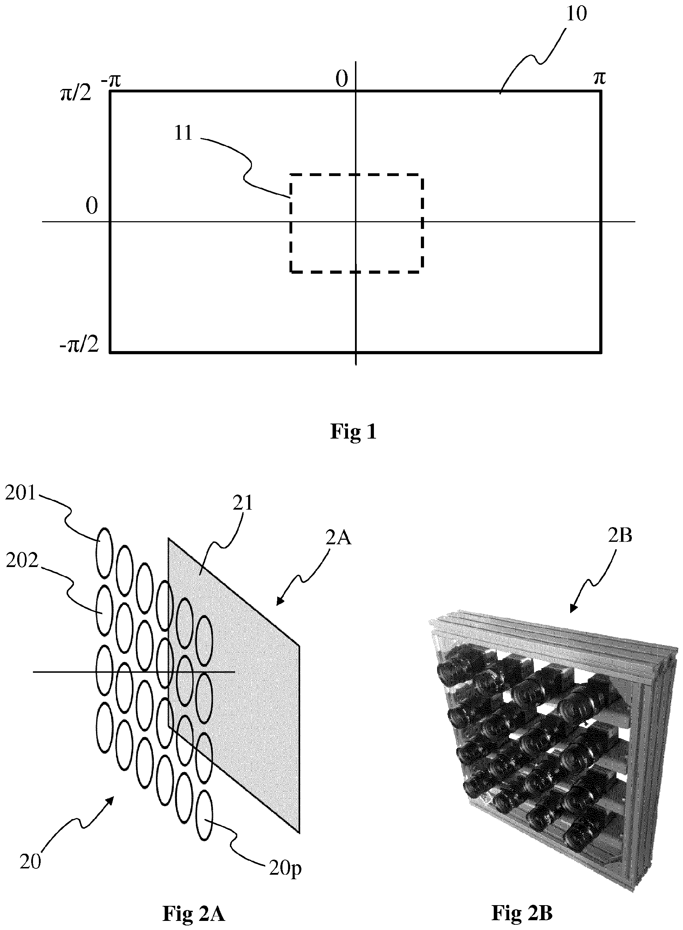

**Figure 1** shows an example of an immersive content 10, in the non-limiting exemplary form of a $4\pi$ steradian video content, according to a particular and non-limitative embodiment of the present principles. Figure 1 corresponds to a planar representation of the immersive content 10. The immersive content 10 corresponds for example to a real scene acquired with one or more cameras or to a mixed-reality scene comprising real and virtual objects, the virtual object being for example synthesized by using a 3D engine. A part 11 of the immersive content 10 corresponds for example to the part of the immersive content displayed onto a display device adapted to visualize immersive contents, the size of the part 11 being for example equal to the field of view provided by the display device.

The display device used to visualize the immersive content 10 is for example a HMD (Head-Mounted Display), worn on the head of a user or as part of a helmet. The HMD advantageously comprises one or more display screens (for example LCD (Liquid Crystal Display), OLED (Organic Light-Emitting Diode) or LCOS (Liquid Crystal On Silicon)) and sensor(s) configured for measuring the change(s) of position of the HMD, for example gyroscopes or an IMU (Inertial Measurement Unit), according to one, two or three axes of the real world (pitch, yaw and/or roll axis). The part 11 of the immersive content 10 corresponding to the measured position of the HMD is advantageously determined with a specific function establishing the relationship between the point of view associated with the HMD in the real world and the point of view of a virtual camera associated with the immersive content 10. Controlling the part 11 of the video content to be displayed on the display screen(s) of the HMD according to the measured position of the HMD enables a user wearing the HMD to browse into the immersive content, which is larger than the field of view associated with the display screen(s) of the HMD. For example, if the field of view offered by the HMD is equal to 110°(for ex ample about the yaw axis) and if the immersive content offers a content of 180°, the user wearing the HMD may rotate his/her head to the right or to the left to see the parts of the video content outside the field of view offered by the HMD. According to another example, the immersive system is a CAVE (Cave Automatic Virtual Environment) system, wherein the immersive content is projected onto the walls of a room. The walls of the CAVE are for example made up of rear-projection screens or flat panel displays. The user may thus browse his/her gaze on the different walls of the room. The CAVE system is advantageously provided with cameras acquiring images of the user to determine by video processing of these images the gaze direction of the user. According to a variant, the gaze or the pose of the user is determined with a tracking system, for example an infrared tracking system, the user wearing infrared sensors. According to another variant, the immersive system is a tablet with a tactile display screen, the user browsing into the content by scrolling the content with one or more fingers sliding onto the tactile display screen.

The immersive content 10 and the part 11 as well may comprise foreground object(s) and background object(s).

Naturally, the immersive content 10 is not limited to a $4\pi$ steradian video content but extends to any video content (or audio-visual content) having a size greater than the field of view 11. The immersive content may be for example a $2\pi$, $2.5\,\pi$, $3\pi$ steradian content and so on.

**Figures 2A and 2B** show an example of a lightfield acquisition device. More specifically, figure 2A and 2B each show a camera array 2A, 2B (also called multi-camera arrays), according to two particular embodiments of the present principles.

The camera array 2A comprises an array 20 of lenses or micro-lenses comprising several micro-lenses 201,202 to 20p with p being an integer corresponding to the number of micro-lenses, and one or several sensor arrays 21. The camera array 2A does not include a main lens. The array of lenses 20 may be a small device, which is commonly named a micro-lens array. The camera array with a single sensor can be considered as a special case of plenoptic camera where the main lens has an infinite focal length. According to a particular arrangement wherein the number of photosensors is equal to the number of micro-lenses, i.e. one photosensor is optically associated with one micro-lens, the camera array 20 may be seen as an arrangement of a plurality of individual cameras (for example micro-cameras) closely spaced, such as a square arrangement (as illustrated in figure 2A) or a quincunx arrangement for example.

The camera array 2B corresponds to a rig of individual cameras each comprising a lens and a photosensor array. The cameras are spaced apart by, for example, a distance equal to a few centimetres or less or 5, 7 or 10 cm.

The lightfield data (forming a so-called lightfield image) obtained with such a camera array 2A or 2B corresponds to the plurality of views of the scene, i.e. to the final views that may be obtained by demultiplexing and demosaicing a raw image obtained with a plenoptic camera such as the plenoptic camera of the type 1.0, corresponding to a plenoptic camera wherein the distance between the lenslet array and the photosensor array is equal to the microlenses focal length, or of the type 2.0 otherwise (also called focused plenoptic camera). The cameras of the camera array 2B are calibrated according to any known method, i.e. intrinsic and extrinsic parameters of the cameras are known.

The different views obtained with the lightfield acquisition device enables to obtain an immersive content or at least a part of the immersive content. Naturally, the immersive content may be obtained with acquisition device different from a lightfield acquisition device, for example with a camera associated with a depth sensor (e.g. an infra-red emitter/receiver such as the Kinect of Microsoft or with a with a laser emitter).

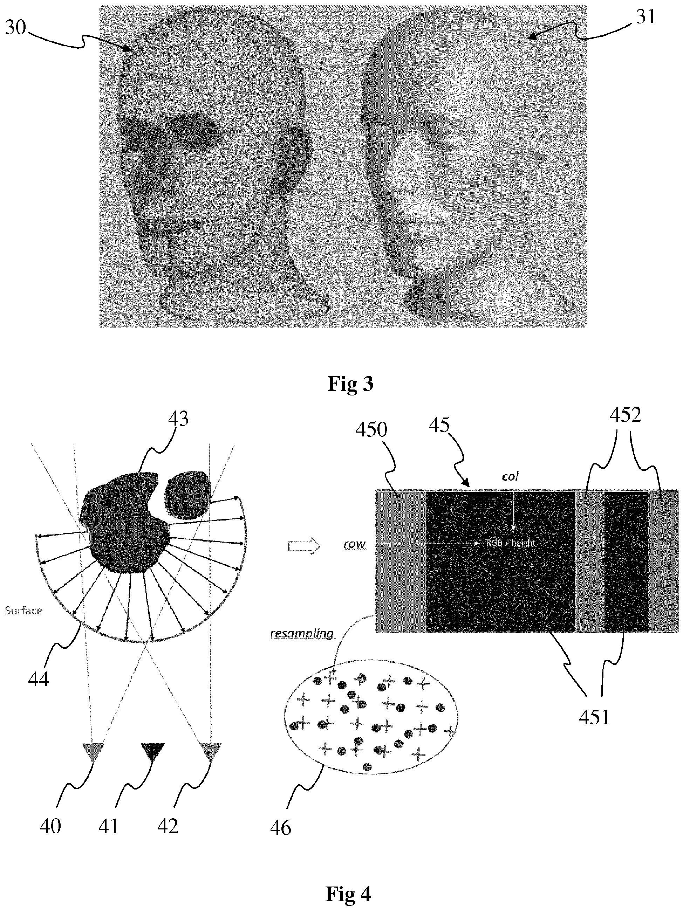

**Figure 3** shows two different representations of an object, or part of it, of the scene represented with the immersive content. According to the example of figure 3, the object is a person, for example moving within the scene, and a part of the object corresponding to the head is illustrated in figure 3.

A first representation 30 of the part of the object is a point cloud. The point cloud corresponds to a large collection of points representing the object, e.g. the external surface or the external shape of the object. A point cloud may be seen as a vector based structure, wherein each point has its coordinates (e.g. three-dimensional coordinates XYZ, or a depth/distance from a given point of view) and one or more attributes, also called component. An example of component is the color component that may be expressed in different color spaces, for example RGB (Red, Green and Blue) or YUV (Y being the luma component and UV two chrominance components). The point cloud is a representation of the object as seen from a given point of view, or a range of point of views. The point cloud may be obtained of different ways, e.g.:

- from a capture of a real object shot by a rig of cameras, as the camera arrays of figure 2, optionally complemented by depth active sensing device;
- from a capture of a virtual/synthetic object shot by a rig of virtual cameras in a modelling tool;
- from a mix of both real and virtual objects.

In the first case (from the capture of a real object), the set of cameras generates a set of images or sequences of images (videos) corresponding to the different views (different points of view). The depth information - meaning the distance from each camera center to the object surface - is obtained either by means of active depth sensing device, e.g., in infrared range and based on structured light analysis or time of flight, or based on disparity algorithms. In both cases, all cameras need to be calibrated, intrinsically and extrinsically. The disparity algorithms consists on a search of similar visual features on a pair of rectified camera images, typically to be made along a 1-dimension line: the larger the pixel column difference, the closer the surface of this feature. In the case of a camera array, the global depth information may be obtained from the combining of a plurality of peer disparity information, taking benefit of the plurality of camera pairs, therefore improving the signal over noise ratio.

In the second case (synthetic object), the modelling tool provides directly the depth information.

A second representation 31 of the part of the object may be obtained from the point cloud representation 30, the second representation corresponding to a surface representation. The point cloud may be processed in order to compute its surface. For that purpose, for a given point of the point cloud, the neighboring points of this given point are used in order to compute the normal to the local surface at this given point, the surface element associated with this given point being derived from the normal. The process is reiterated for all points to obtain the surface. Methods for reconstructing the surface from a point cloud are for example described by Matthew Berger et al. in "State of the Art in Surface Reconstruction from Point Clouds", State of the Art Report, 2014. According to a variant, the surface element associated with a given point of the point cloud is obtained by applying splat rendering to this given point. The surface of the object (also called implicit surface or external surface of the object) is obtained by blending all the splats (e.g., ellipsoids) associated with the points of the point cloud.

In a particular embodiment, the point cloud represents only partial views of the object, and not the object in its totality, and this corresponds to the way how the object is supposed to be watched at the rendering side, for example in a cinematographic scene. For example, the shooting of a character facing a flat camera array generates a point cloud on the side of the rig only. The back of the character does not even exist, the object is not closed on itself, and the geometric characteristics of this object is therefore the set of all the surfaces oriented in the direction of the rig (the angle between the normal of each local surfaces and the ray back to the acquisition device is for example less than 180°).

**Figure 4** shows a surface 44 used to represent the object 43, according to a non-limiting embodiment of the present principles. The surface 44 is a parametric surface, i.e. a surface defined with parameters and defined by a parametric equation.

An example of a possible parametric surface is given by a cylinder, as illustrated in figure 4 (for clarity purpose, only one dimension is illustrated but the surface may be defined in 2 or 3 dimensions). The parametric surface may take any form, e.g. a square, a rectangle or more complex shapes as long as the surface may be defined with a parametric equation, i.e. with a limited number of parameters. The object 43 (that may correspond to the object of figure 3) is acquired with 3 acquisition devices 40, 41 and 42, e.g. 3 RGB cameras. A different point of view is associated with each acquisition device 40, 41, 42. A projection of the surface of the object 43 on a flat cylindrical surface 45 corresponds to the mapping/projection of the parametric surface 44 onto a rectangle. Color information and depth information associated with the points of the object 43 and acquired and/or calculated from the images obtained with the acquisition devices 40, 41, 42 are associated with corresponding points of the flat cylindrical surface 45, i.e. color + height information is associated with each point/pixel defined by a row index and a column index. The color and height information associated with the part 450 of the surface 45 is obtained from the view of the acquisition device 40; the color and height information associated with the parts 451 of the surface 45 is obtained from the view associated with the acquisition device 41; and the color and height information associated with the parts 452 of the surface 45 is obtained from the view associated with the acquisition device 42.

The ellipsoid 46 illustrates a part of the surface 45, the circular points corresponding to the projection of the points of the point cloud representation of the object 43 onto the parametric surface 44 or its flat representation 45. The sampling of the parametric surface 44 may be different from the sampling resulting from the point cloud.

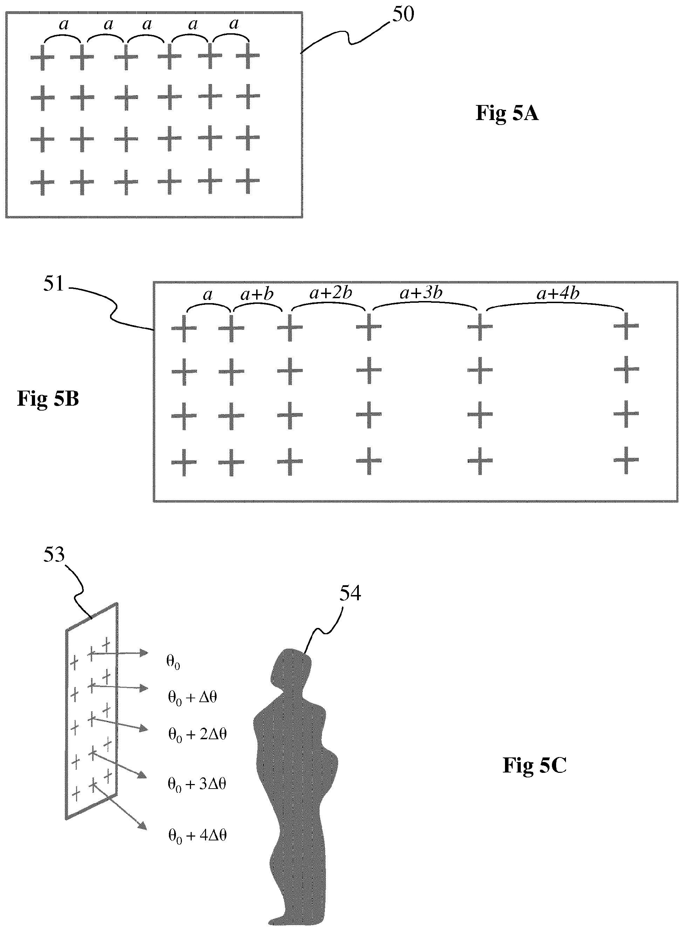

A sampling of the parametric surface is represented with cross "+" in the ellipsoid 46, the sampling of the parametric surface being described with a limited number of parameters. The sampling of the parametric surface 44 may be uniform of non-uniform as illustrated in the exemplary embodiments of **figures 5A, 5B and 5C.**

In the example of **figure 5A,** the sampling 50 of the parametric surface is uniform, i.e. the columns of sample points are arranged at a same distance from each other, i.e. with a distance "a", the same applying to the rows.

In the example of **figure 5B,** the sampling 51 of the parametric surface is non-uniform, i.e. the columns of sample points are arranged at different distances from each other, i.e. the first two columns (starting from the left-hand side) are spaced apart of a distance "a", the distance between two columns being then "a+b", then "a+2b", then "a+3b" and so forth. In the example of figure 5B, the rows are spaced from each other with a same distance.

In the examples of figures 5A and 5B, the direction associated with the height information associated with each sample is orthogonal to the parametric surface. In the example of **figure 5C,** the direction associated with the height information associated with the samples of the sampling 53 varies from a sample to another one with a varying angle $\theta_0 + q*\Delta\theta$, wherein $\theta_0$ is an initial angle and q an integer varying from 0 to a maximum value N, $\Delta\theta$ corresponding to the angle variation between two consecutive samples.

The density of the sampling on the parametric surface is for example adjusted in function of:

- the sampling of the object, i.e. of the point cloud; and/or
- the expected rendering quality.

For example, the further the object, less dense will be the camera sampling, and less dense may be the sampling on the parametric surface.

The value to be associated with the samples of the parametric surface are:

- a geometrical information, namely the distance between the parametric surface and the object implicit surface;
- a color information. In the simplest form, a compound color value may be computed out the different views for the object surface area corresponding to each sample of the parametric surface, leading to for example an average diffuse color (i.e. the average of the color information of the points of the point cloud that may be associated with a sample of the parametric surface).

The height information associated with the samples of the parametric surface may be stored in a height map having as many samples as the parametric surface.

The color information associated with the samples of the parametric surface may be stored in a texture map having as many samples as the parametric surface.

The height information to be associated with a given sample may be obtained by casting a ray from the given sample (either orthogonally to the parametric surface or not, depending on the sampling as explained with regard to figures 5A, 5B and 5C), the height being determined from the distance separating the sample from the points of the point cloud belonging to the area of the point cloud associated with the intersection between the ray and the surface of the object obtained from the point cloud. When several points belong to the area, the distance may be the average of the distances separating the sample from the plurality of points of the area. The parametric surface and the point cloud being defined in the world space with regard to the acquisition device, the distance between a sample of the parametric surface and a point of the external surface of the object is obtained as being the Euclidian distance.

In a same way, the texture information to be associated with a given sample may be obtained by casting a ray from the given sample. The texture information is obtained from the texture/color information of the points of the point cloud (e.g. the average) belonging to the area corresponding to the intersection between the ray and the surface of the object. In another embodiment, when an analytic representation of the parametric surface is known (i.e. its geometry and normal), the point cloud may be directly splat (using the associated information of normal and size) onto the parametric surface, e.g. making use of an iterative Newton scheme. In that case the texture information is obtained from the blending of the splats.

In a variant, a plurality of parametric surfaces may be associated with a same object. The object may be segmented into a plurality of parts and a different parametric surface may be associated with each part, the parametric surface associated with a given part being determined according to the specific geometry of the part and according to the pose information of the acquisition device used to acquire the part. According to this variant, a height map and one or more texture maps are associated with each parametric surface. For example, if the object is a person, a first parametric surface may be associated with one leg, a second parametric surface may be associated with the other leg, a third parametric surface may be associated with the arm, a fourth parametric surface may be associated with the other arm, a fifth parametric surface may be associated with the torso and a sixth parametric surface may be associated with the head.

As an option, additional textures can be added in order to record computational by-products from MLS (Moving Least Squares) surface which are necessary for rendering but time consuming. Example can be the texture of normal vector, for example in a mode equivalent to CGI normal map, or splat geometry such as small and large axe directions and size. The constraint of those additional textures is that it should exhibit good spatial and temporal coherency characteristics in order to fit well with compression engine. When all necessary information are transmitted, MLS kernel parameters are no more useful to transmit.

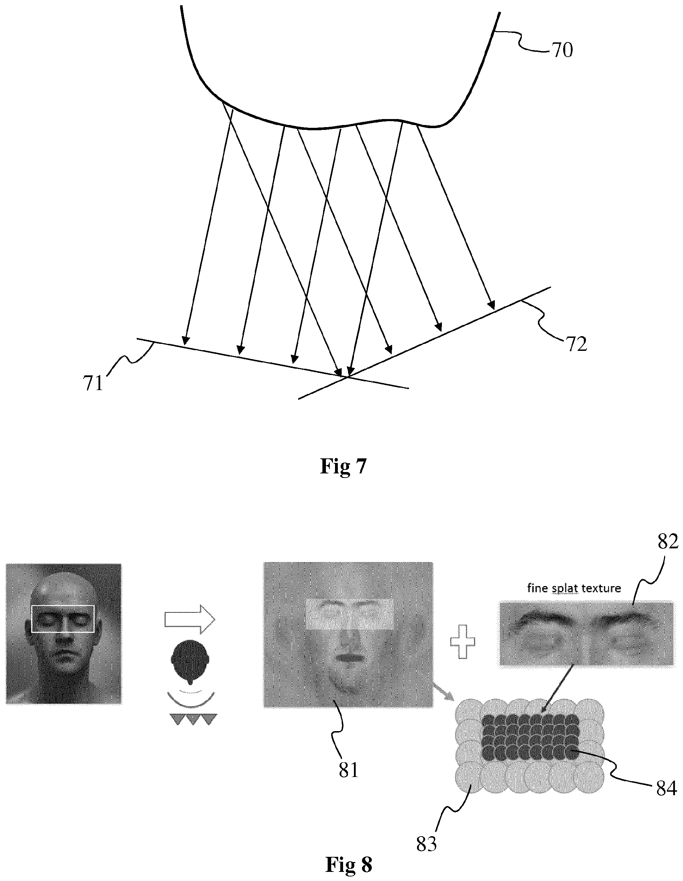

In a specific embodiment illustrated in **Figure 7,** a plurality of texture maps may be associated with one or more parametric surfaces. Figure 7 illustrates the generation of 2 parametric surfaces 71, 72 for the part 70 of the object, the part 70 emitting for example different colors according to different angles. In that case, the information of angular spread of the colors may be recorded and conveyed as well as another texture information, in order to render that correctly at client side (for example by interpolating between the 2 colors according to the direction of viewport). According to a variant, a single parametric surface may be generated in place of the 2 parametric surfaces 70, 71, the different texture maps being associated with the single parametric surface.

In a specific embodiment illustrated in **Figure 8,** a plurality of parametric surfaces may be generated for a same part of the object. For example, a first parametric surface may be calculated for (and associated with) the face 81 of a person. A second parametric surface may be calculated for (and associated with) a part of the face 81, namely the part 82 comprising the eyes. A first height map and a first texture map may be associated with the first texture map, enabling to represent the face with a first level of detail 83 for example. A second height map and a second texture map may be associated with the second texture map, enabling to represent the part 82 of the face with a second level of detail 84 for example. To reach that aim, a first definition is associated with the first parametric surface and a second definition (higher than the first definition) is associated with the second parametric surface. To make the second texture visible when rendering the face, an offset value is subtracted from the height values calculated for generating the second height map. The height values stores in the second height map are then less than the real calculated height values separating the second parametric surface from the external surface of the face. When rendering the face, the second texture information will be positioned in front of the first texture information, with regard to the rendering point of view.

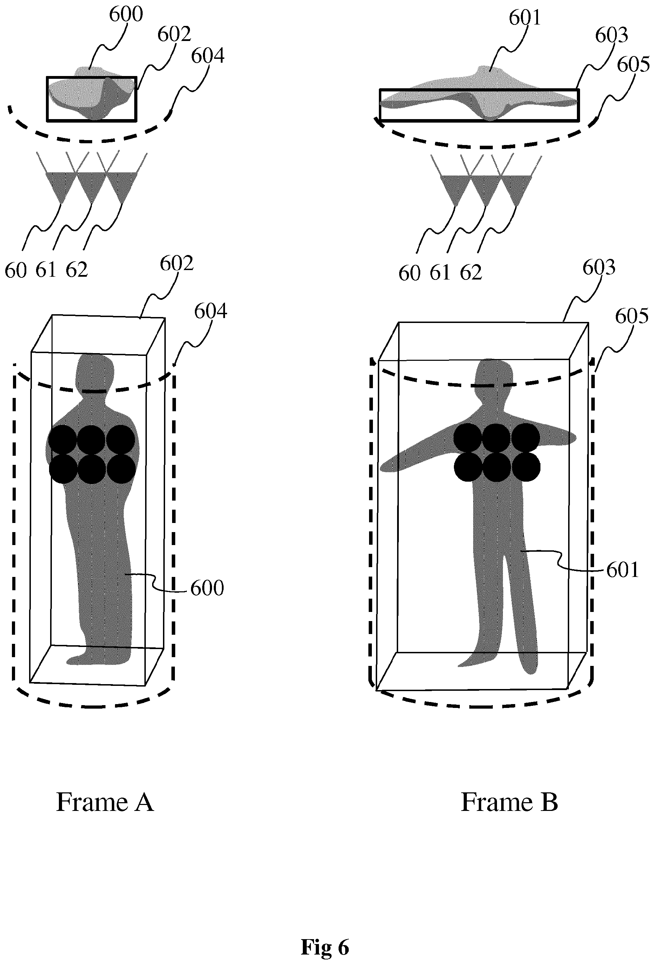

**Figure 6** shows the matching of the parametric surface with regard to a deformation of the object, according to a particular and non-limiting embodiment of the present principles. The left-hand side part of figure 6 shows the parametric surface 604 associated with the object 600 obtained at time t (or for a first frame A of a video) and the right-hand side part of figure 6 shows the parametric surface 605 associated with the object 601 (corresponding to the object 600 but with a different external shape, i.e. the object 601 corresponds to a deformed version of the object 600) obtained at time t+1 (or for a second frame B of a video temporally following the first frame A). The object 600, 601 is acquired with a set of cameras 60, 61, 62, e.g. corresponding to the acquisition devices 40, 41, 42 of figure 4. The upper part of figure 6 corresponds to a top view of the user and the cameras and the lower part of figure 6 corresponds for example to a front view of the user and the cameras, the cameras being illustrated with black disks on the lower part.

In order to stick best to the object, the partial cylinder 604, 605 corresponding to the parametric surface surrounds the object 600, 601 respectively partially, close to the object 600, 601 respectively, on the side of the rig of cameras 60, 61, 62 (which is typically static). Coordinates of the parametric surface 600, 601 may be obtained by computing a bounding box 602, 603 surrounding the object 600, 601 respectively, the bounding box 602, 603 being defined by each extreme (x,y,z) coordinates of the point cloud). Parameters representative of the parametric surface 604, 605 (e.g. height, radius, center position for a parametric surface of the cylindrical form) are determined as being the ones able to encompass the bounding box, the parametric surface 604, 605 being open in the direction of the cameras view. This example shows that the parametric surface depends both of the (moving) object and of the location of the rig of cameras.

When the object 600, 601 captured by the cameras 60, 61, 62 moves from time t to time t+1, the point cloud used to represent the object changes as well: the topology (or the geometric characteristics of the object) changes according for example to the motion of the object (or according to deformation applied to the object), for example the width and/or height of the object change. It is therefore relevant to adjust the topology of the parametric surface which is used to represent the object with the associated height map and texture map(s) that record and/or convey all the geometrical and/or texture information related to the point cloud, for each video frame. Following constraints may be applied:

- the projection of the point cloud onto the parametric surface may form video images with good spatial and temporal consistency so that it can be efficiently compressed by regular compression engine, for example based on standard such as H264/MPEG4 or H265/HEVC or any other standards, meaning that the surface is allowed to evolve smoothly, without saccade; and/or
- the parametric surface may be placed as regards to the point cloud in order to maximize the parts of the parametric surface to be covered by the projection of the point cloud and minimize its distance to the point cloud, therefore preserving the quality of the final image as measured for example by a PSNR metric. More precisely, the parametric surface is chosen in such a way that:

  1. It takes the largest benefit of its (width x height) image resolution; and/or
  2. It optimizes the number of useful bits for coding the depth.

- the evolution/change of the parametric surface at each frame may be easily recorded, conveyed as metadata, and recovered on the decoder/renderer side, meaning that the parametric surface may be expressed in a limited number of parameters.

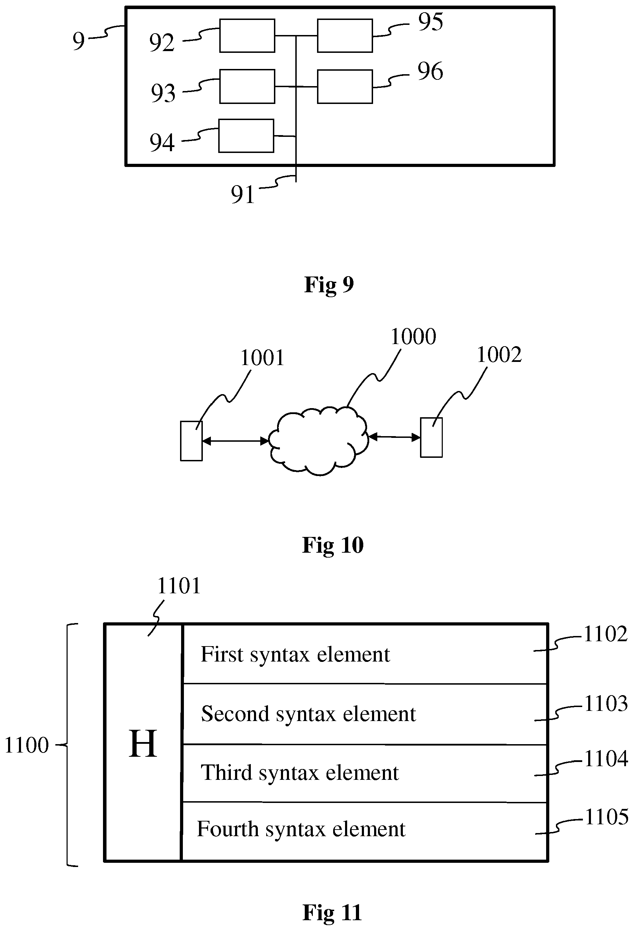

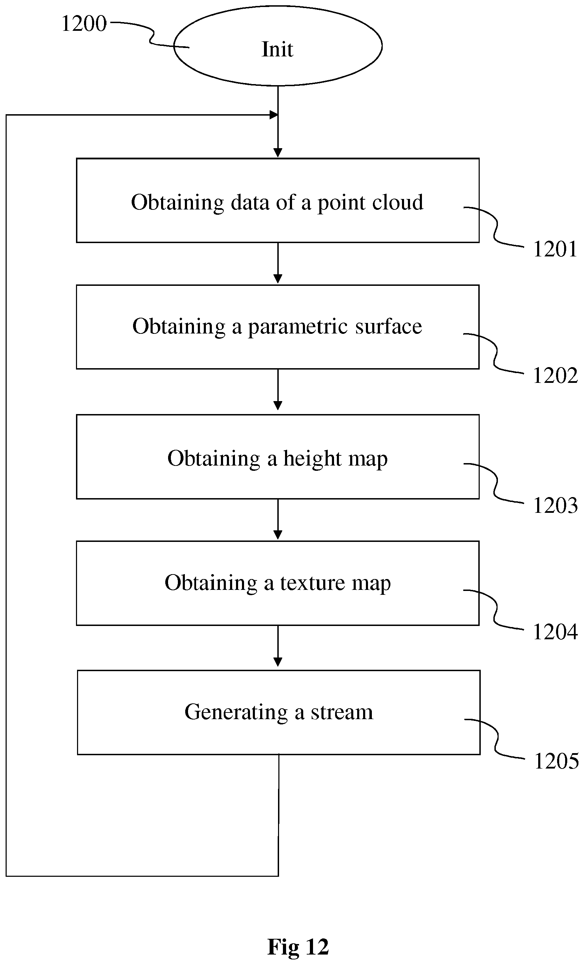

**Figure 12** illustrates a method for generating a stream comprising data representative of an object of a scene implemented for example in a device 9 (described with regard to figure 9), according to a non-restrictive embodiment of the present principles.

In a step 1200, the different parameters of the device 9 are updated. In particular, the data associated with the representation of the object are initialised in any way.

In a step 1201, data associated with the points of a point cloud representing a part of the object, or the object as a whole, is obtained. The data is for example received from a memory device, such as the local memory of the device 9 or a remote storage device such as a server (e.g. via a network such as the Internet, or a Local Area Network). According to another example, the data is received from one or more acquisition devices used to acquire one or more views of the scene comprising the object. The data comprises for example texture information (e.g., color information) and distance information (e.g., depth of height corresponding to the distance between the considered point and the point of view associated with the considered point, i.e. the point of view of the acquisition device used to acquire the considered point).

In a step 1202, one or more parameters representative of a parametric surface are obtained. The parametric surface is associated with the part of the object (or the whole object) represented with the point cloud. A general expression of an exemplary parametric surface is the following:

$$x = f_1(t_1, t_2)$$

$$y = f_2(t_1, t_2)$$

$$z = f_3(t_1, t_2)$$

with x, y, z coordinates in 3 dimensions, $f_1$, $f_2$, $f_3$ continuous functions and $t_1$, $t_2$ parameters. The parameters of the parametric surface are obtained according to geometric characteristic(s) of the external surface associated with the point cloud and from pose information of the one or more acquisition devices used to obtain the points of the point cloud. To determine the parametric surface to be associated with the considered part of the object, the coordinates of the extreme points of the point cloud may for example be determined from the coordinates associated with the points. The extreme points correspond to the points having the minimal value or the maximal for at least one of the dimensions of the space into which are expressed the coordinates. A bounding box wrapping the point cloud is obtained from the extreme points. The parametric surface may be obtained as being the cylinder having as center the center of the back face of the bounding box and passing through the front edges of the bounding box, the reference being the acquisition device. The orientation of the parametric surface is thus determined by using the pose information of the acquisition device.

According to a variant, normal vectors associated with the external surface of the part of the object are calculated from the point cloud. The variation of the orientation of the normal vectors may be used to determine the parametric surface in a way that the parametric surface closely stick to the shape variation of the external surface.

In a step 1203, a height map associated with the parametric surface obtained at step 1202 is obtained, i.e. determined or calculated. For each sample of the parametric surface, a height value is calculated by launching a ray (e.g. orthogonal to the parametric surface at the considered sample). The height value to be associated with the considered sample corresponds to the distance between the considered sample and the element of the external surface of the part of the object point (corresponding to the intersection between the ray and the external surface). Coordinates associated with the element of the external surface are for example obtained from the points of the point cloud used to generate this surface element of the external surface. A height value may be calculated for each sample of the parametric surface to obtain the height map, the height map corresponding for example to a two-dimensional map (or image) storing a height value for each sample of the map, the number of samples of the map corresponding to the number of samples of the sampling of the parametric surface.

In a step 1204, a texture map associated with the parametric surface obtained at step 1202 is obtained, i.e. determined or calculated. The texture map corresponds for example to a two-dimensional map (or image) storing a texture information (e.g., color information) for each sample of the map, the number of samples of the texture map corresponding to the number of samples of the sampling of the parametric surface. A texture information associated with a considered sample of the parametric surface is determined by launching a ray, e.g., orthogonal to the parametric surface at the considered sample. The texture information to store in the texture map corresponds to the texture information associated with the surface element of the external surface of the part of the object crossed by the ray. The texture information associated with the surface element is obtained from the texture information of the points of the point cloud used to obtain this surface element. In a variant, several texture maps may be obtained for the parametric surface.

In a step 1205, a data stream 1100 comprising data representative of the part of the object is obtained by combining the parameters obtained at step 1202, the height information obtained at step 1203 and the texture information obtained at step 1204. An example of the structure of such a stream 1100 being described with regard to figure 11. A representation of the part of the object in the form of a parametric surface associated with a height map and one or more texture maps has the advantage of reducing the amount of data needed to represent the part of the object in comparison to a representation with a point cloud. A further information representative to the position of the acquisition device(s) used to obtain the point cloud may be added to the stream. This further information has the advantage of constraining the rendering of the part of the object on the rendering device in the limit of the range of points of view of the acquisition of the part of the object, thus avoiding rendering artifacts that may occur when trying to render the part of the object from the data stream according to a point of view that does not correspond to the range of points of view used to obtain the point cloud that is the basis for the representation of the part of the object included in the stream.

In an optional step, the data stream is transmitted to a encoder and received by a decoder or renderer for rendering or displaying purpose of the part of the object.

In a variant, the data of the stream changes over the time, for example from frame to frame, e.g., when the shape or the external surface of the part of the object varies over the time. When the external surface changes, the parameters of the parametric surface are updated with the height and texture maps to represent the change of shape of the part of the object.

In another variant, several parametric surfaces may be used to represent a same part of the object, for example according to different sampling resolutions.

A single parametric surface may be used to represent the object as a whole or different parametric surfaces may be used to represent the object as a whole, for example one different parametric surface being determined for representing each different part of the object. In such a variant, the data stream is obtained by combining the different parametric surfaces and associated height and texture maps.

According to another variant, a flat video (i.e. 2D video) representative of the background of the object is added to the stream, for example in a media container such as mp4 or mkv.

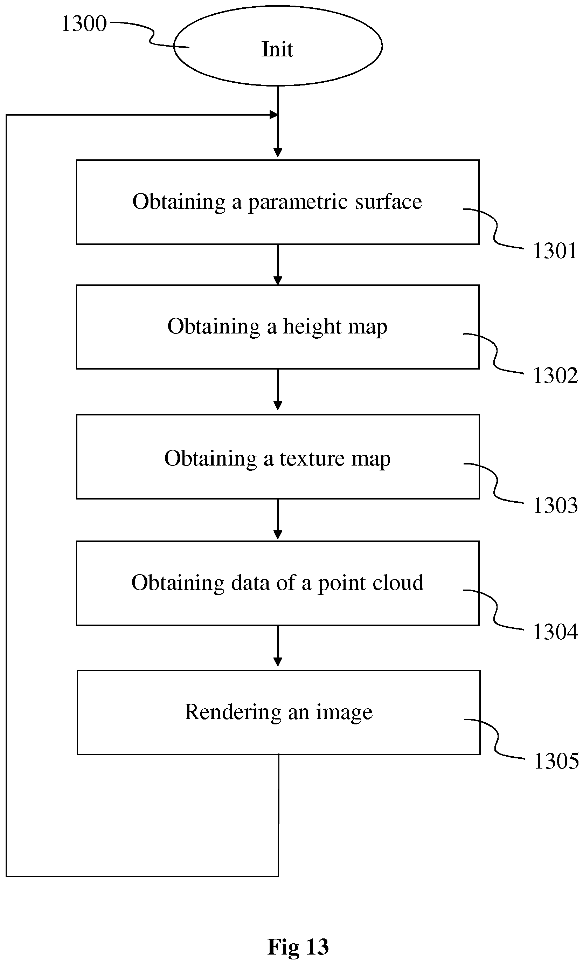

**Figure 13** illustrates a method for rendering an image representative of at least a part of the object from the stream obtained with the method of figure 12. The rendering method is for example implemented in a device 9 (described with regard to figure 9), according to a non-restrictive embodiment of the present principles.

In a step 1300, the different parameters of the device 9 are updated. In particular, the data associated with the representation of the at least a part of the object are initialised in any way.

In a step 1301, one or more parameters representative of a parametric surface are obtained from the data stream 1100, an example of the structure of such a stream being described with regard to figure 11. The one or more parameters correspond for example to the parameters obtained at step 1202.

In a step 1302, a height map associated with the parametric surface obtained at step 1301 is obtained from the stream 1100. The height map corresponds for example to the height map obtained at step 1203.

In a step 1303, one or more texture maps associated with the parametric surface obtained at step 1301 is or are obtained from the stream 1100. The texture maps correspond for example to the texture maps obtained at step 1204.

In a step 1304, data associated with points of a point cloud are obtained from the parametric surface obtained at step 1301, the height map obtained at step 1302 and the texture map obtained at step 1303. The points are obtained by deprojecting the samples of the parametric surface, the coordinates of the points being derived from the coordinates of the samples and the height information associated with the samples, the texture information of the points being obtained from the texture information associated with the samples.

In a step 1305, an image of the part of the object represented with the parametric surface, height map and texture maps is rendered from a point of view that is constrained by the position information comprised in the stream 1100. The external surface of the part of the object may for example be obtained by applying a splat rendering technique to the points of the obtained point cloud. In a variant, a sequence of images is rendered when the stream comprises information representative of the object or part of it for a sequence of frames (i.e. images).

**Figure 9** shows an exemplary architecture of a device 9 which may be configured to implement a method described in relation with figures 12 and/or 13.

The device 9 comprises following elements that are linked together by a data and address bus 91:

- a microprocessor 92 (or CPU), which is, for example, a DSP (or Digital Signal Processor);
- a ROM (or Read Only Memory) 93;
- a RAM (or Random Access Memory) 94;
- a storage interface 95;
- an I/O interface 96 for reception of data to transmit, from an application; and
- a power supply, e.g. a battery.

In accordance with an example, the power supply is external to the device. In each of mentioned memory, the word « register » used in the specification can correspond to area of small capacity (some bits) or to very large area (e.g. a whole program or large amount of received or decoded data). The ROM 93 comprises at least a program and parameters. The ROM 93 may store algorithms and instructions to perform techniques in accordance with present principles. When switched on, the CPU 92 uploads the program in the RAM and executes the corresponding instructions.

The RAM 94 comprises, in a register, the program executed by the CPU 92 and uploaded after switch on of the device 9, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example of encoding or an encoder, the first, second, third and/or fourth syntax elements are obtained from a source. For example, the source belongs to a set comprising:

- a local memory (93 or 94), e.g. a video memory or a RAM (or Random Access Memory), a flash memory, a ROM (or Read Only Memory), a hard disk ;
- a storage interface (95), e.g. an interface with a mass storage, a RAM, a flash memory, a ROM, an optical disc or a magnetic support;
- a communication interface (96), e.g. a wireline interface (for example a bus interface, a wide area network interface, a local area network interface) or a wireless interface (such as a IEEE 802.11 interface or a Bluetooth® interface); and
- a user interface such as a Graphical User Interface enabling a user to input data.

In accordance with examples of the decoding or decoder(s), the first, second and/or third information are sent to a destination; specifically, the destination belongs to a set comprising:

- a local memory (93 or 94), e.g. a video memory or a RAM, a flash memory, a hard disk ;
- a storage interface (95), e.g. an interface with a mass storage, a RAM, a flash memory, a ROM, an optical disc or a magnetic support; and
- a communication interface (96), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface).

In accordance with examples of encoding or encoder, a bitstream comprising data representative of the object is sent to a destination. As an example, the bitstream is stored in a local or remote memory, e.g. a video memory (94) or a RAM (94), a hard disk (93). In a variant, the bitstream is sent to a storage interface (95), e.g. an interface with a mass storage, a flash memory, ROM, an optical disc or a magnetic support and/or transmitted over a communication interface (96), e.g. an interface to a point to point link, a communication bus, a point to multipoint link or a broadcast network.

In accordance with examples of decoding or decoder or renderer, the bitstream is obtained from a source. Exemplarily, the bitstream is read from a local memory, e.g. a video memory (94), a RAM (94), a ROM (93), a flash memory (93) or a hard disk (93). In a variant, the bitstream is received from a storage interface (95), e.g. an interface with a mass storage, a RAM, a ROM, a flash memory, an optical disc or a magnetic support and/or received from a communication interface (95), e.g. an interface to a point to point link, a bus, a point to multipoint link or a broadcast network.

In accordance with examples, the device 9 is configured to implement a method described in relation with figure 12, and belongs to a set comprising:

- a mobile device;
- a communication device;
- a game device;
- a tablet (or tablet computer);
- a laptop;
- a still picture camera;
- a video camera;
- an encoding chip;
- a server (e.g. a broadcast server, a video-on-demand server or a web server).

In accordance with examples, the device 9 is configured to implement a rendering method described in relation with figure 13, and belongs to a set comprising:

- a mobile device;
- a communication device;
- a game device;
- a set top box;

- a TV set;
- a tablet (or tablet computer);
- a laptop; and
- a display (such as a HMD for example).

In accordance with an example illustrated in **Figure 10,** in a transmission context between two remote devices 1001 and 1002 (of the type of the device 9) over a communication network NET 1000, the device 1001 comprises means which are configured to implement a method for generating a stream as described in relation with the figure 12, and the device 1002 comprises means which are configured to implement a method for rendering an image as described in relation with figure 13.

In accordance with an example, the network 1000 is a LAN or WLAN network, adapted to broadcast still pictures or video pictures with associated audio information from device 1001 to decoding/rendering devices including the device 1002.

**Figure 11** shows an example of an embodiment of the syntax of such a signal when the data are transmitted over a packet-based transmission protocol. Figure 11 shows an example structure 1100 of an immersive video stream. The structure consists in a container which organizes the stream in independent syntax elements. The structure may comprise a header part 1101 which is a set of data common to every syntax elements of the stream. For example, the header part contains metadata about syntax elements, describing the nature and the role of each of them. The structure may comprise a payload comprising syntax elements 1102, 1103, 1104 and 1105, the first syntax element 1102 being relative to the parameters defining the parametric surface, the second syntax element being relative to the height map associated with the parametric surface, the third syntax element being relative to the one or more texture maps associated with the parametric surface and the fourth syntax element being relative to a position information of the acquisition device.

Naturally, the present disclosure is not limited to the embodiments previously described.

In particular, the present disclosure is not limited to a method and device for generating a stream but also extends to a method for encoding/decoding a packet comprising data representative of an object of a scene and to any device implementing this method and notably any devices comprising at least one CPU and/or at least one GPU.

The present disclosure also relates to a method (and a device configured) for displaying images rendered from the data stream comprising the information representative of the object of the scene and to a method (and a device configured) for rendering and displaying the object with a flat video.

The present disclosure also relates to a method (and a device configured) for transmitting and/or receiving the stream.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of generating a stream from at least one image of an object of a scene, the method comprising:

   - obtaining (1201) data associated with points of a point cloud representing at least a part of said object;
   - obtaining (1202) parameters representative of a parametric surface according to at least a geometric characteristic associated with said at least a part of the object and pose information of an acquisition device used to acquire said at least one image, said at least a geometric characteristic being obtained from said data associated with points of said point cloud associated with said at least a part of the object;
   - obtaining (1203) a height map associated with said parametric surface from said data, said height map comprising information representative of distance between said at least a part of the object and said parametric surface;
   - obtaining (1204) at least one color map associated with said parametric surface from color information associated with points of said point cloud associated with said at least a part of the object;

- generating (1205) said stream by combining together a first syntax element relative to the parameters, a second syntax element relative to the height map, a third syntax element relative to the at least one color map and a fourth syntax element relative to a position of said acquisition device.

2. The method according to claim 1, wherein said point cloud represents said object as seen from a range of points of view.

3. The method according to claim 1 or 2, wherein said parameters vary over time according to a deformation of said at least a part of the object.

4. A device configured to generate a stream from at least one image of an object of a scene, the device comprising a memory associated with at least one processor configured to:

- obtain data associated with points of a point cloud representing at least a part of said object;
- obtain parameters representative of a parametric surface according to at least a geometric characteristic associated with said at least a part of the object and pose information of an acquisition device used to acquire said at least one image, said at least a geometric characteristic being obtained from said data associated with points of said point cloud associated with said at least a part of the object;
- obtain a height map associated with said parametric surface from said data, said height map comprising information representative of distance between said at least a part of the object and said parametric surface;
- obtain at least one color map associated with said parametric surface from color information associated with points of said point cloud associated with said at least a part of the object;
- generate said stream by combining together a first syntax element relative to the parameters, a second syntax element relative to the height map, a third syntax element relative to the at least one color map and a fourth syntax element relative to a position of said acquisition device.

5. The method according to claim 4, wherein said point cloud represents said object as seen from a range of points of view.

6. The device according to claim 4 or 5, wherein said at least a parameter varies over time according to a deformation of said at least a part of the object.

7. A stream carrying first data representative of an object of a scene, wherein the data comprises:

- a first syntax element (1102) relative to parameters representative of a parametric surface obtained according to at least a geometric characteristic associated with said at least a part of the object and pose information of an acquisition device used to acquire said at least one image, said at least a geometric characteristic being obtained from said data associated with points of said point cloud associated with said at least a part of the object;
- a second syntax element (1103) relative to a height map obtained from second data associated with points of a point cloud representing said at least a part of the object, the height map comprising information representative of distance between said at least a part of the object and said parametric surface;
- a third syntax element (1104) relative to at least one color map obtained from said color information associated with points of said point cloud associated with said at least a part of the object; and
- a fourth syntax element (1105) relative to a position of said acquisition device.

8. The stream according to claim 7, wherein said point cloud represents said object as seen from a range of points of view.

9. The stream according to claim 7 or 8, wherein said first syntax element (1102) varies over time according to a change of said at least a parameter that varies according to a deformation of said at least a part of the object.

10. A method of rendering an image of at least a part of an object from a stream carrying data representative of said object, the method comprising:

- obtaining (1301 ) parameters representative of a parametric surface from a first syntax element of the stream;
- obtaining (1302) a height map from a second syntax element of the stream, the height map comprising information representative of distance between said at least a part of the object and said parametric surface;
- obtaining (1303) at least one color map from a third syntax element of the stream;
- obtaining (1304) data associated with points of a point cloud representing said at least a part of the object from said parametric surface, said height map and said at least one color map;
- rendering (1305) said image based on said data and information representative of a position of an acquisition device from a fourth syntax element of the stream.

11. The method according to claim 10, wherein said point cloud represents said object as seen from a range of points of view.

12. The method according to claim 10 or 11, wherein the rendering comprises splat rendering of said data.

13. A device configured to render an image of at least a part of an object from a stream carrying data representative of said object, the device comprising a memory associated with at least one processor configured to:

   - obtain parameters representative of a parametric surface from a first syntax element of the stream;
   - obtain a height map from a second syntax element of the stream, the height map comprising information representative of distance between said at least a part of the object and said parametric surface;
   - obtain at least one color map from a third syntax element of the stream;
   - obtain data associated with points of a point cloud representing said at least a part of the object from said parametric surface, said height map and said at least one color map;
   - render said image based on said data and information representative of a position of an acquisition device from a fourth syntax element of the stream.

14. The device according to claim 13, wherein said point cloud represents said object as seen from a range of points of view

15. The device according to claim 13 or 14, wherein the at least one processor is further configured to perform splat rendering of said data to render said image.

**Fig 1**

**Fig 2A**

**Fig 2B**

**Fig 3**

**Fig 4**

**Fig 5A**

50

$a$ $a$ $a$ $a$ $a$

**Fig 5B**

51

$a$ $a+b$ $a+2b$ $a+3b$ $a+4b$

53

54

$\theta_0$

$\theta_0 + \Delta\theta$

$\theta_0 + 2\Delta\theta$

$\theta_0 + 3\Delta\theta$

$\theta_0 + 4\Delta\theta$

**Fig 5C**

Frame A                    Frame B

**Fig 6**

Fig 7

fine splat texture

Fig 8

9 ⌇
92 ⌇ [ ] — [ ] ⌐ 95
93 ⌇ [ ] — [ ] ⌐ 96
94 ⌇ [ ]
91 ⌇

**Fig 9**

1001   1000   1002

**Fig 10**

1101
1100 {
| H | First syntax element | ⌐1102 |
| | Second syntax element | ⌐1103 |
| | Third syntax element | ⌐1104 |
| | Fourth syntax element | ⌐1105 |

**Fig 11**

1200

Init

Obtaining data of a point cloud

1201

Obtaining a parametric surface

1202

Obtaining a height map

1203

Obtaining a texture map

1204

Generating a stream

1205

**Fig 12**

1300

Init

Obtaining a parametric surface — 1301

Obtaining a height map — 1302

Obtaining a texture map — 1303

Obtaining data of a point cloud — 1304

Rendering an image — 1305

**Fig 13**

Europäisches
Patentamt

European
Patent Office

Office européen
des brevets

**EUROPEAN SEARCH REPORT**

Application Number

EP 17 17 1671

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI JIA ET AL: "Retrieving cross-sectional contours from tunnel point clouds", 2015 INTERNATIONAL CONFERENCE ON COMPUTERS, COMMUNICATIONS, AND SYSTEMS (ICCCS), IEEE, 2 November 2015 (2015-11-02), pages 188-191, XP032956940, DOI: 10.1109/CCOMS.2015.7562898 * paragraph [0III] * ----- | 1-15 | INV. H04N13/02 |

TECHNICAL FIELDS
SEARCHED (IPC)

G06T
H04N

The present search report has been drawn up for all claims

| Place of search | Date of completion of the search | Examiner |
|---|---|---|
| The Hague | 3 October 2017 | Wahba, Alexander |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MATTHEW BERGER et al.** State of the Art in Surface Reconstruction from Point Clouds. *State of the Art Report,* 2014